# FASCICULE DE BREVET EUROPEEN

(11) **EP 1 351 791 B1**
(45) Date de publication et mention de la délivrance du brevet: **25.01.2006**
(21) Numéro de dépôt: 02711958.5
(22) Date de dépôt: 15.01.2002
(51) Int. Cl.: B23D 61/18, B23D 65/00

(54) **PROCEDE DE FABRICATION D'UN OUTIL DE COUPE SOUPLE, ET OUTIL DE COUPE SOUPLE AINSI OBTENU**
VERFAHREN ZUR HERSTELLUNG EINES BIEGSAMEN SCHNEIDWERKZEUGS, UND DERART HERGESTELLTES BIEGSAMES SCHNEIDWERKZEUG
METHOD FOR MAKING A FLEXIBLE CUTTING TOOL, AND RESULTING CUTTING TOOL

(30) Priorité: 15.01.2001 FR 0100458
(43) Date de publication de la demande: 15.10.2003
(73) Titulaire: Cofilt, 31470 Empeaux (FR)
(72) Inventeur: SCHRALL, Philippe, F-31600 Muret (FR); GELIS, Jean Pierre, F-31470 Empeaux (FR)
(74) Mandataire: Morelle, Guy Georges Alain
(86) Numéro de dépôt international: PCT/FR2002/000135
(87) Numéro de publication internationale: WO 2002/055248

(56) Documents cités:
- EP-A- 0 256 619
- EP-A- 0 822 023
- DE-A- 2 400 205
- DE-A- 3 527 841
- DE-A- 4 306 273
- DE-A- 19 752 223
- FR-A- 949 457
- FR-A- 1 378 362
- FR-A- 2 019 598
- US-A- 2 696 228
- US-A- 5 080 086
- PATENT ABSTRACTS OF JAPAN vol. 015, no. 325 (M-1148), 19 août 1991 (1991-08-19) -& JP 03 124338 A (FUJITSU LTD), 27 mai 1991 (1991-05-27)

## Description

La présente invention se rapporte au domaine des outils de coupe souples comportant un support flexible filiforme qui possède une section transversale circulaire sensiblement constante, une pluralité d'éléments rigides solidaires dudit support flexible filiforme, ladite pluralité d'éléments rigides comportant au moins une arête tranchante frontale se développant dans l'espace entourant le support flexible filiforme, ainsi qu'à leur procédé de fabrication.

On connaît des outils de coupe de type fil abrasif, par exemple obtenus par trempage d'un fil métallique d'une longueur déterminé, faible en général, dans un récipient contenant des éléments abrasifs qui vont se fixer sur la surface du fil. Un tel procédé de fabrication limite la longueur de fil abrasif que l'on peut obtenir, en particulier par les dimensions du récipient de trempage, conférant à de tels fils abrasifs un usage particulier limité, notamment à des scies à mouvements alternatifs de longueur de coupe réduite. En outre, le fil abrasif obtenu par trempage n'autorise qu'un recouvrement total de la surface de l'âme du fil, ce qui peut entraîner dans certains cas des problèmes d'évacuation de la matière enlevée et de chauffage du fil. Enfin, la vitesse de coupe reste faible, et le coût d'un tel outil abrasif élevé.

On connaît également des outils de coupe souple comportant une pluralité d'éléments rigides solidaires du support flexible filiforme, ces éléments rigides comportant au moins une arête tranchante frontale se développant dans l'espace entourant le support flexible filiforme. De tels outils sont plus particulièrement décrits dans les documents FR 1 378 362 (état de la technique la plus proche), FR 949 457, FR 2 019 598, US 5,080,086, DE 197 52 223, US 2,696,228, DE 35 27 841, DE 24 00 205, DE 43 06 273. Cependant, tous ces outils sont très onéreux à fabriquer, tout en étant des outils d'usure destinés à être renouveler.

La présente invention propose un procédé de fabrication d'un outil de coupe souple, qui permet de pallier ces inconvénients, et d'apporter d'autres avantages. Plus précisément, l'invention se rapporte à un procédé de fabrication d'un outil de coupe souple comportant un support flexible filiforme qui possède une section transversale circulaire sensiblement constante, une pluralité d'éléments rigides solidaires dudit support flexible filiforme, ladite pluralité d'éléments rigides comportant au moins une arête tranchante frontale se développant dans l'espace entourant le support flexible filiforme, caractérisé en ce que ladite pluralité d'éléments rigides est obtenue au moins par enroulement et sertissage, respectivement d'une pluralité de tronçons de bandes métalliques autour dudit support flexible.

Selon une caractéristique avantageuse, le procédé selon l'invention consiste à :
a) placer au moins une bande métallique au moins partiellement autour dudit support flexible filiforme, et sectionner ladite au moins une bande métallique à la longueur voulue en fonction du diamètre dudit support flexible filiforme, de façon à former au moins un tronçon de bande métallique,
b) meuler au moins une des deux extrémités dudit au moins un tronçon,
c) parfaire l'enroulement dudit au moins un tronçon de bande métallique autour dudit support flexible filiforme de sorte que les deux extrémités soient jointives,
d) souder lesdites deux extrémités dudit au moins un tronçon,
e) former ladite au moins une arête tranchante au moyen d'un outil à frapper entraînant simultanément le sertissage dudit au moins un tronçon sur ledit support flexible filiforme,
f) durcir superficiellement ladite au moins une arête tranchante par un traitement thermique permettant d'obtenir ledit au moins un élément rigide.

Selon une autre caractéristique, ladite étape de formage de ladite au moins une arête tranchante au moyen d'un outil à frapper est exécutée de manière radiale et concentrique au dit support flexible filiforme.

Selon une autre caractéristique, le procédé selon l'invention consiste à exécuter les étapes a) à f) successivement au moyen d'un outil à suivre par avancement dudit support flexible filiforme.

Selon une autre caractéristique, le procédé selon l'invention consiste à renouveler l'exécution successive des étapes a) à f) au moyen d'un outil à suivre par avancement dudit support flexible filiforme et de ladite bande métallique, en vue d'associer ladite pluralité d'éléments rigides au dit support flexible filiforme.

Selon une autre caractéristique, le procédé selon l'invention consiste à imprimer une rotation au dit support flexible filiforme durant son avancement de manière à décaler angulairement ladite au moins une arête tranchante sur deux éléments rigides successifs.

Selon une autre caractéristique, le procédé selon l'invention consiste à former au moins deux arêtes tranchantes successives différentes sur deux éléments rigides successifs, respectivement, lors de l'étape e).

Selon une autre caractéristique, le procédé selon l'invention consiste en outre à affûter ladite au moins une arête tranchante après l'avoir durcie superficiellement, afin de modifier son profil.

Selon une autre caractéristique, le procédé selon l'invention consiste en outre à effectuer un traitement de surface de ladite au moins une arête tranchante après l'avoir durcie superficiellement, afin d'augmenter sa dureté et sa résistance à l'usure.

L'invention se rapporte également à un outil de coupe souple comportant un support flexible filiforme qui possède une section transversale circulaire sensiblement constante, comportant une pluralité d'éléments rigides solidaires du support flexible filiforme, ladite pluralité d'éléments rigides comportant au moins une arête tranchante frontale se développant dans l'espace entourant le support flexible filiforme, caractérisé en ce que ledit outil est obtenu par un procédé selon l'invention.

L'utilisation d'une arête tranchante frontale permet de couper la matière au lieu de l'user par frottement comme cela est le cas avec des fils abrasifs. Ainsi, chaque élément rigide avantageusement fixé de manière rigide sur le support flexible porte au moins une arête tranchante frontale permettant d'usiner la matière à la manière d'un outil coupant L'élément rigide de coupe agit non plus par sa surface latérale qui frotte contre la matière à couper, mais agit par sa face frontale qui présente une arête de coupe.

Selon une caractéristique avantageuse, ladite arête tranchante se développe dans l'espace entourant le support flexible filiforme, sur un des éléments rigides au moins.

Selon une autre caractéristique, lesdits éléments rigides sont espacés selon un pas déterminé le long du support flexible.

Selon une autre caractéristique, lesdits éléments rigides adoptent respectivement une surface extérieur longitudinale comportant une forme conique, ladite surface extérieure longitudinale étant délimitée entre une première et une deuxième surfaces transversales d'extrémité, ladite première surface d'extrémité présentant une superficie supérieure à celle de la deuxième surface d'extrémité, la projection de la deuxième surface d'extrémité suivant un axe longitudinal du support flexible étant inscrite dans ladite première surface d'extrémité, et en ce que ladite au moins une arête tranchante est constituée par la ligne d'intersection entre la surface extérieure longitudinale de l'élément rigide et la première surface d'extrémité de ce dernier.

Une telle forme d'élément rigide est plus particulièrement adaptée pour la coupe de matériaux non abrasifs, par exemple des matériaux que l'on rencontre dans le domaine de l'agro-alimentaire, comme les produits surgelés.

Selon une autre caractéristique, deux éléments rigides successifs sont décalés de manière angulaire dans un plan transversal au support flexible.

Ainsi, la section frontale de coupe peut être répartie sur plusieurs éléments rigides, un élément rigide assumant seulement une partie de l'arête tranchante définissant la section frontale de coupe.

Selon une autre caractéristique, ledit support flexible filiforme est un câble mono-toron.

Selon une autre caractéristique, ledit support flexible forme une boucle.

D'autres caractéristiques et avantages apparaîtront à la lecture qui suit de plusieurs exemples de modes de réalisation d'un outil de coupe souple et de procédé de fabrication selon l'invention, accompagnée des dessins annexés, exemples donnés à titre illustratif non limitatifs.
La figure 1 est une vue schématique en coupe longitudinale d'un premier exemple de mode de réalisation d'un outil de coupe souple selon l'invention.
La figure 2 est une vue de bout, suivant la direction F, de l'exemple selon la figure 1.
La figure 3 est une vue schématique en coupe longitudinale d'un deuxième exemple de mode de réalisation d'un outil de coupe souple selon l'invention.
La figure 4 est une vue schématique en coupe longitudinale d'un troisième exemple de mode de réalisation d'un outil de coupe souple selon l'invention.
La figure 5 est une vue schématique en coupe longitudinale d'un quatrième exemple de mode de réalisation d'un outil de coupe souple selon l'invention.
La figure 6 est une vue schématique en coupe longitudinale d'un cinquième exemple de mode de réalisation d'un outil de coupe souple selon l'invention.
Les figures 7 à 12 représentent en vue de bout six exemples de modes de réalisation d'une partie de l'outil de coupe souple selon l'invention.
Les figures 13 à 17 représentent en vue en coupe transversale cinq étapes de fabrication d'un exemple de mode de réalisation d'un procédé de fabrication d'un outil de coupe souple selon l'invention.

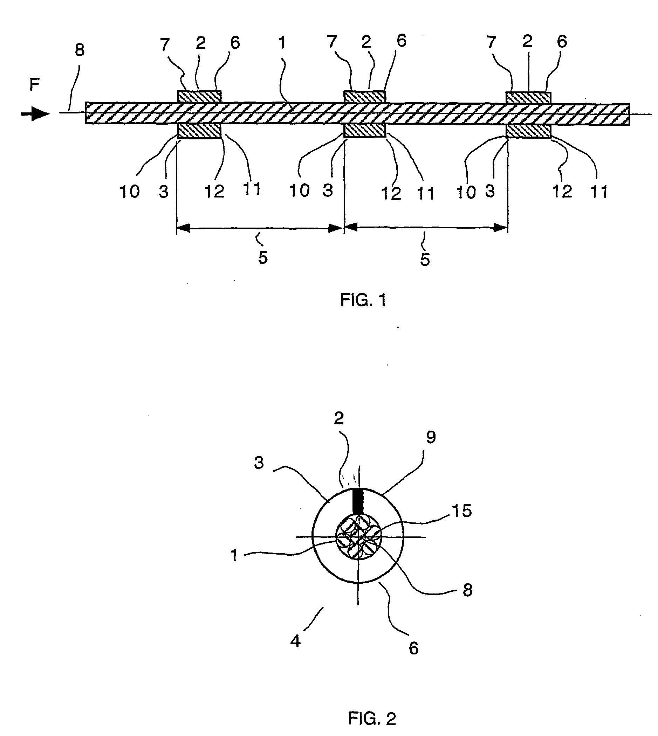

L'outil de coupe souple représenté sur les figures 1 et 2 comporte un support flexible filiforme 1, qui possède une section transversale circulaire sensiblement constante, une pluralité d'éléments rigides 2 solidaires du support flexible filiforme 1, comportant respectivement une première 3 et une deuxième 12 arêtes tranchantes frontales se développant dans l'espace 4 entourant le support flexible filiforme.

Le support flexible filiforme 1 peut être en tout matériau souple, résistant en traction à l'effort de coupe qui doit être fourni, par exemple un câble métallique comme représenté, ou un cordage tressé en fibres aramides ou analogue. Le matériau du câble devra être résistant à l'usure en fonction du matériau coupé. Lorsque le matériau coupé est abrasif, par exemple de la brique ou du papier, le câble sera de préférence un câble métallique mono-toron, moins souple qu'un câble multi-torons, mais plus résistant L'incidence d'utilisation d'un câble mono-toron réside principalement dans le rayon minimal de courbure d'un tel câble, qui est plus grand que celui d'un câble multi-torons. Lorsque le matériau coupé n'est pas, ou est moins, abrasif, par exemple comme des produits alimentaire congelés, 1e support flexible filiforme pourra être un câble métallique multi-torons, permettant ainsi l'utilisation de poulies d'entraînement d'un diamètre plus faible, et ainsi l'obtention d'une machine à couper d'un volume plus réduit, jusqu'à celui d'un appareil ménager par exemple.

Les éléments rigides 2 sont réalisés en métal, par exemple en acier pour outil de coupe apte à subir un formage à froid, et obtenus au moins par enroulement et sertissage, respectivement d'une pluralité de tronçons de bandes métalliques autour du support flexible 1. Chaque tronçon de bande métallique à partir duquel un élément rigide est constitué, possède une largeur inférieure ou égale à la longueur de l'élément rigide et une longueur correspondant environ à la circonférence du support flexible filiforme, puis est enroulé et serti autour de ce dernier, comme expliqué plus loin. La largeur du tronçon de bande peut en effet être déterminée en tenant compte du fait que lors du sertissage il existe un certain fluage de la matière. Les éléments rigides 2 peuvent avantageusement subir un traitement thermique afin d'augmenter leur résistance à l'usure.

Les éléments rigides 2 sont associés respectivement au support flexible filiforme 1 par une liaison totale rigide, obtenue par sertissage. Les éléments rigides 2 sont espacés le long du support flexible 1 selon un pas 5 déterminé, par exemple un pas variable, ou un pas constant comme représenté sur la figure 1.

Comme représenté sur la figure 1, les éléments rigides 2 adoptent par exemple respectivement une surface extérieure 6 longitudinale engendrée par une droite 7 qui se déplace parallèlement à une direction fixe 8 en s'appuyant sur une ligne déterminée 9, la surface extérieure longitudinale étant délimitée entre une première 10 et une deuxième 11 surfaces transversales d'extrémité, les première 3 et deuxième 12 arêtes tranchantes étant constituées respectivement par les lignes d'intersection entre la surface extérieure longitudinale 6 de l'élément rigide 2 et les première 10 et deuxième 11 surfaces d'extrémité de ce dernier. Les première 3 et deuxième 12 arêtes tranchantes sont avantageusement formées au moyen d'un outil à frapper entraînant simultanément le sertissage du tronçon de bande de métal sur le support flexible filiforme 1.

Dans le cas de la figure 1, la direction fixe est donnée par l'axe longitudinal 8 du support flexible, et la ligne déterminée 9 est une ligne courbe fermée, un cercle 9 en l'occurence, conférant ainsi à un élément rigide 2 la forme d'un cylindre à section transversale circulaire. Les première 10 et deuxième 11 surfaces transversales d'extrémité sont parallèles entre elles, et perpendiculaires à l'axe longitudinal 8 du support flexible 1, de sorte qu'un élément rigide 2 adopte la forme d'un cylindre droit. Les arêtes tranchantes 3, 12 opposées l'une à l'autre permettent à l'outil souple de travailler en coupe suivant l'axe longitudinal 8 dans un sens et le sens inverse, de sorte que l'outil de coupe souple peut fonctionner en va et vient ou déplacement unidirectionnel continu. Dans le cas d'un déplacement de l'outil unidirectionnel, une seule surface d'extrémité 10 ou 11 assure le rôle de face de coupe, et dans le cas d'un déplacement bidirectionnel alternatif de l'outil, les deux faces d'extrémité 10, 11 opposées assurent alternativement la fonction de face de coupe.

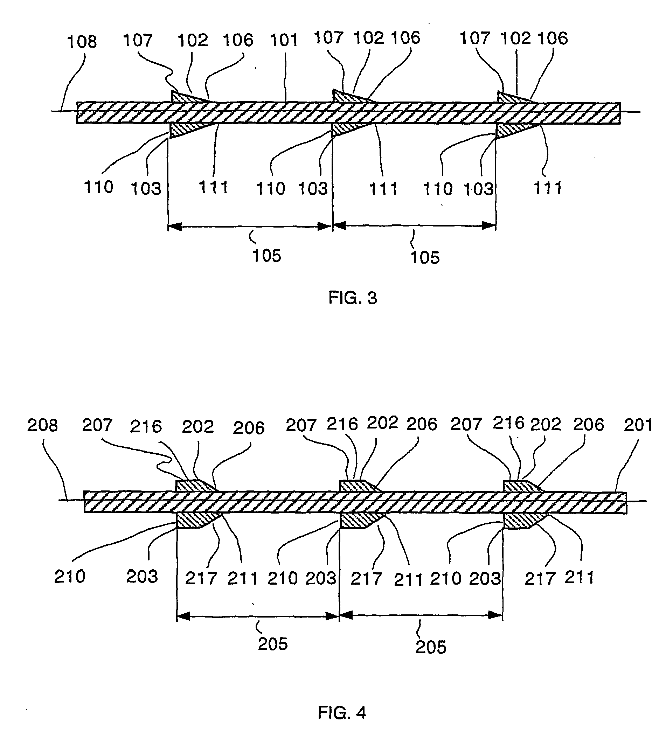

La figure 3 représente un outil de coupe souple similaire à celui de la figure 1, à la différence des éléments rigides 102 qui adoptent une autre forme. Sur la figure 3, les éléments similaires à ceux de l'outil de coupe représenté sur la figure 1 ont été référencés avec les mêmes références numériques additionnées du nombre 100.

Les éléments rigides 102 adoptent respectivement une surface extérieure 106 longitudinale comportant une forme conique, la surface extérieure longitudinale 106 étant délimitée entre une première 110 et une deuxième 111 surfaces transversales d'extrémité, la première surface 110 d'extrémité présentant une superficie supérieure à celle de la deuxième surface 111 d'extrémité, la projection de la deuxième surface d'extrémité 111 suivant un axe longitudinal 108 du support flexible 101 étant inscrite dans la première surface 110 d'extrémité, l'arête tranchante 103 étant constituée par la ligne d'intersection entre la surface extérieure longitudinale 106 de l'élément rigide 102 et la première 110 surface d'extrémité de ce dernier.

Sur la figure 3, les éléments 102 sont tronconiques, dont la forme extérieure est inscrite dans des cônes droits respectivement, la deuxième surface d'extrémité étant sensiblement égale à la section transversale du support flexible 102, comme représenté.

La figure 4 représente un outil de coupe souple similaire à celui de la figure 1 ou 3, à la différence des éléments rigides 202 qui adoptent une autre forme. Sur la figure 4, les éléments similaires à ceux de l'outil de coupe représenté sur la figure 1 ont été référencés avec les mêmes références numériques additionnées du nombre 200.

Les éléments rigides 202 adoptent respectivement une surface extérieure 206 longitudinale comportant une forme conique, la surface extérieure longitudinale 206 étant délimitée entre une première 210 et une deuxième 211 surfaces transversales d'extrémité, la première surface 210 d'extrémité présentant une superficie supérieure à celle de la deuxième surface 111 d'extrémité, la projection de la deuxième surface d'extrémité 211 suivant un axe longitudinal 208 du support flexible 201 étant inscrite dans la première surface 210 d'extrémité, l'arête tranchante 203 étant constituée par la ligne d'intersection entre la surface extérieure longitudinale 106 de l'élément rigide 102 et la première 110 surface d'extrémité de ce dernier.

Sur la figure 4, les éléments rigides 202 adoptent respectivement la forme d'une partie cylindrique 216 de section circulaire suivie dans l'axe 208 du support 201 d'une partie conique 216 dont la section de base correspond à la section transversale de 1a partie cylindrique 216 et la section opposée à la section de base correspond à 1a section transversale du support 201.

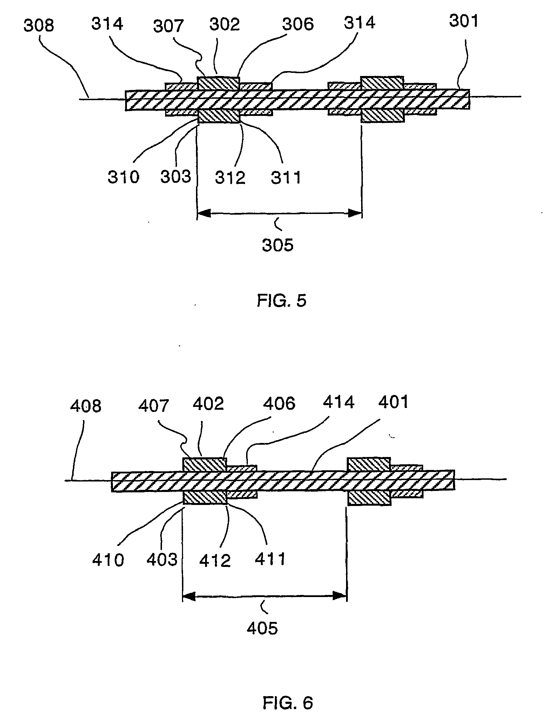

La figure 5 représente un outil de coupe souple similaire à celui de la figure 1, à la différence des éléments rigides 302 qui adoptent une autre forme et/ou un mode de fixation au support différent. Sur la figure 5, les éléments similaires à ceux de l'outil de coupe représenté sur la figure 1 ont été référencés avec les mêmes références numériques additionnées du nombre 300.

Les éléments rigides 302 sont fabriqués à partir de tôles enroulées et serties sur le support 301, les tôles comportant par exemple respectivement deux épaulements 303, 312 opposés de manière à former une section en escalier telle que représentée sur la figure 5, ou sur la figure 6 pour laquelle les tôles comportent un seul épaulement.

Sur la figure 5, la coupe est effectuée par la partie centrale de la tôle dont le diamètre est le plus grand, les deux arêtes tranchantes 303 et 312 étant constituées par les deux épaulements respectivement. Les parties latérales 314 peuvent être utilisées pour renforcer le sertissage de l'élément rigide 302 sur le support 301.

La figure 6 représente un outil de coupe souple similaire à celui de la figure 5, à la différence des éléments rigides 402 qui adoptent une autre forme. Sur la figure 6, les éléments similaires à ceux de l'outil de coupe représenté sur la figure 5 ont été référencés avec les mêmes références numériques additionnées du nombre 100. Sur la figure 6, à la différence de la figure 5, une seule partie latérale 414 est adjointe à la partie centrale de l'élément rigide 402, qui est également obtenu à partir d'une tôle ou bande métallique. L'élément rigide 402 comporte deux arêtes tranchantes 403 et 412 afin de couper dans les deux sens opposés de déplacement du support.

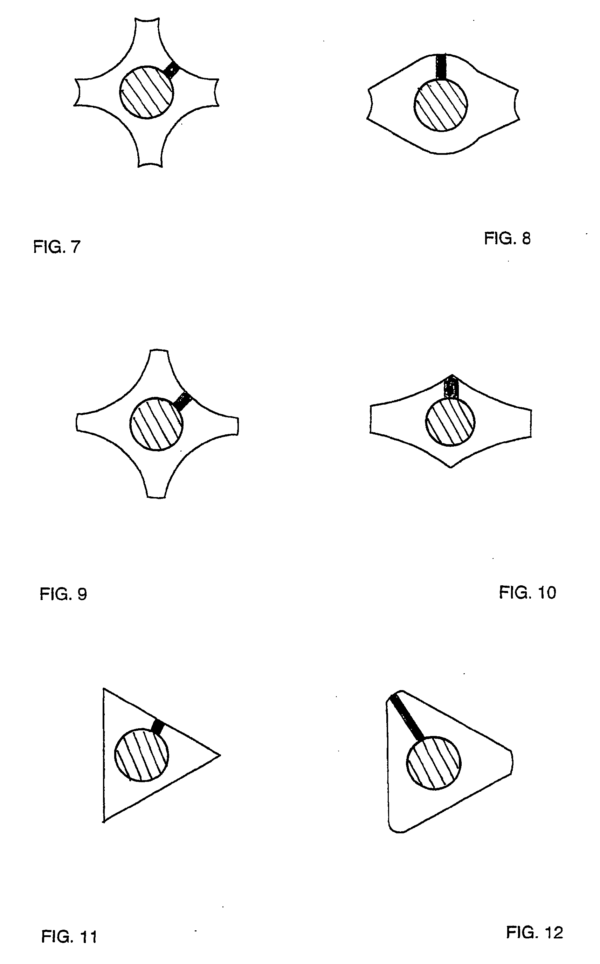

Comme représenté sur les figures 7 à 12, les éléments rigides peuvent adopter diverses sections transversales, qui peuvent être identiques ou différentes sur un même support. En outre, deux éléments rigides successifs peuvent être décalés de manière angulaire dans un plan transversal au support flexible de sorte que la ligne périphérique de 1a section de coupe peut être conférée par plusieurs éléments rigides et non un seul.

Sur les figures 7 à 12, les exemples d'éléments rigides représentés adoptent respectivement une surface extérieure longitudinale (non représentée sur les figures) engendrée par une droite qui se déplace parallèlement à une direction fixe en s'appuyant sur une ligne déterminée, la surface extérieure longitudinale étant délimitée entre une première et une deuxième surfaces transversales d'extrémité, et la ou les arêtes tranchantes étant constituées par la ligne d'intersection entre la surface extérieure longitudinale de l'élément rigide et au moins la première surface d'extrémité de ce dernier représentée en vue de bout sur les figures 7 à 12. Le contour représenté sur chaque figure 7 à 12 illustre cette ligne d'intersection qui constitue l'arête tranchante.

Sur les figures 7, 8, 9, 10, 11 et 12, la direction fixe est donnée par l'axe longitudinal du support flexible, et la ligne déterminée est une ligne brisée fermée.

Sur les figures 7, 8, 9,10, et 12, la ligne brisée fermée comporte une ou plusieurs parties courbes, notamment des arcs de cercles.

Sur les figures 7 à 12, la liaison par soudage des deux extrémités d'un tronçon de bande métallique formant un élément rigide a été représenté en zone noircie.

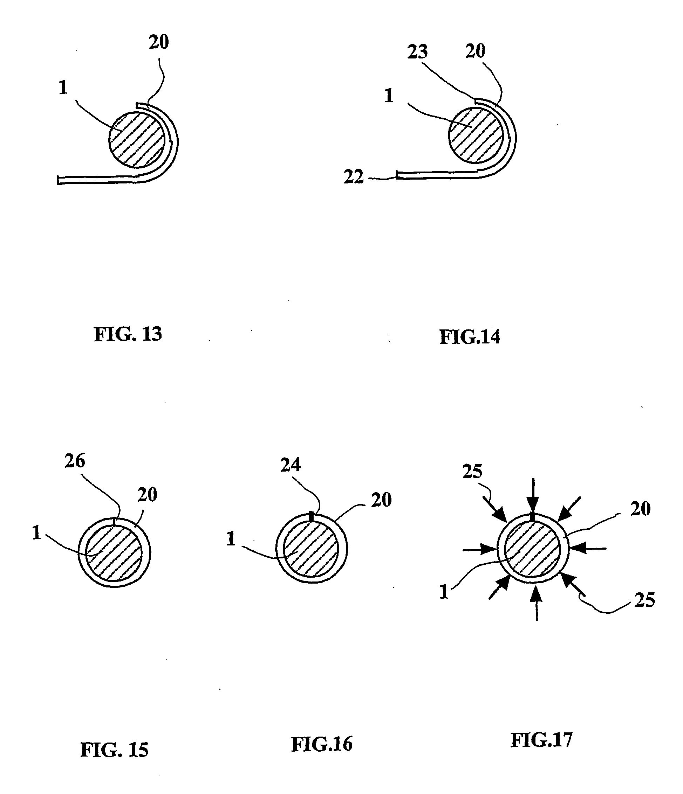

L'outil de coupe souple selon l'invention sera fabriqué de la manière suivante : un feuillard en couronne selon le profil voulu, à partir duquel seront formés les éléments rigides de coupe, et un câble en couronne servant de support flexible des éléments rigides seront disposés sur un bâti approprié, comme décrit ci-dessous ; le feuillard sera coupé en tronçons de bande métallique identiques de longueur déterminée correspondant sensiblement à la circonférence du câble, qui seront ensuite roulés autour du câble et sertis selon un pas défini. Un exemple d'un tel procédé de fabrication d'un outil de coupe comme représenté par exemple sur la figure 1, va maintenant être détaillé à l'appui des figures 13 à 17.

L'exemple de procédé suivant est avantageusement exécuté sur une presse à coulisseaux multiples, de type "Bihler" par exemple, selon la technique des outils à suivre. Le procédé consiste à :
a) placer une bande métallique 20 partiellement autour du support flexible filiforme 1, par exemple comme représenté sur la figure 13, de manière à laisser dégagée l'extrémité libre 23 de la bande, et sectionner la bande métallique à la longueur voulue en fonction du diamètre du support flexible filiforme, de manière à laisser libre l'autre extrémité 22 de la bande formée par le sectionnement, de façon à former au moins un tronçon 21 de bande métallique apte à entourer en totalité la circonférence du support flexible 1,
b) meuler les deux extrémités 22, 23 du tronçon 21, comme représentée à la figure 14, au moyen de meules appropriées (non représentées) en fonction de la soudure à réaliser, de manière à préparer ces extrémités à ladite soudure conformément à l'étape d),
c) parfaire l'enroulement du tronçon 21 de bande métallique autour du support flexible filiforme 1 de sorte que les deux extrémités 22, 23 soient jointives, comme représenté sur la figure 15, cette étape étant réalisée au moyen de matrices fermantes appropriées (non représentées), la jonction des extrémités étant représentée par la référence 26,
d) souder les deux extrémités du tronçon 21, comme représenté sur la figure 16, par exemple par un brasage 24, la méthode de soudage devant être compatible avec le matériau constitutif du support flexible,
e) former les arêtes tranchantes 3, 12 au moyen d'un outil à frapper entraînant simultanément le sertissage du tronçon 21 sur le support flexible filiforme 1, comme représenté sur la figure 17, la forme de l'outil à frapper définissant la surface extérieure longitudinale de l'élément rigide, par exemple cylindrique à section transversale circulaire sur l'exemple représenté,
f) durcir superficiellement les deux arêtes tranchantes 3, 12 par un traitement thermique permettant d'obtenir un élément rigide.

L'étape de formage des arêtes tranchantes 3,12 au moyen d'un outil à frapper est avantageusement exécutée de manière radiale et concentrique au support flexible filiforme 1, comme le montre les flèches 25 sur la figure 17.

Les étapes a) à f) peuvent être exécutées successivement au moyen d'outils à suivre par avancement du support flexible filiforme et du tronçon de bande métallique en cours de liaison avec le support flexible. L'exécution successive des étapes a) à f) est renouvelée au moyen desdits outils à suivre par avancement du support flexible filiforme et de la bande métallique, en vue d'associer la pluralité d'éléments rigides 2 au support flexible filiforme 1.

De manière alternative, il est possible d'imprimer une rotation au support flexible filiforme 1 durant son avancement de façon à décaler angulairement les arêtes tranchantes de deux éléments rigides successifs.

Il est possible de former au moins deux arêtes tranchantes successives différentes sur deux éléments rigides successifs, respectivement, lors de l'étape e) décrite ci-dessus, en utilisant deux outils à frapper différents agissant alternativement.

En outre, le procédé selon l'invention peut avantageusement consister à affûter une arête tranchante après l'avoir durcie superficiellement, soit après l'étape f), afin de modifier son profil ou un angle de coupe. Cette opération est avantageusement réalisée au moyen de meules qui peuvent être montées sur un coulisseau supplémentaire de la presse à coulisseaux multiples.

En outre, le procédé selon l'invention peut avantageusement consister à effectuer un traitement de surface de l'arête tranchante après l'avoir durcie superficiellement, soit après l'étape f), afin d'augmenter sa dureté et sa résistance à l'usure.

A titre d'exemple, un fil de coupe souple destiné à être utilisé pour couper la brique crue, l'argile ou analogue peut adopter la configuration suivante :
- assurant la fonction du support souple, un câble métallique mono-toron de sept fils de 0,3 mm de diamètre, définissant un diamètre global extérieur de câble de 1 mm environ,
- assurant la fonction de coupe, une pluralité d'éléments rigides, qui une fois réalisés, possèdent chacun une section transversale circulaire de diamètre extérieur égal à 2 mm, une longueur égale à 2 mm, espacés selon un pas constant de 4 mm sur le câble, en acier traité thermiquement, serties sur le câble. Le feuillard à partir duquel sont réalisés les éléments rigides pourra adopter une épaisseur de 0,5 mm afin de définir des bagues de 2 mm de diamètre, épaisseur passant à 0,2 mm en cas d'épaulement pour les parties latérales.

Dans le cas d'utilisation de l'acier, les éléments rigides seulement peuvent avantageusement subir un traitement thermique, par exemple une trempe par induction, après assemblage avec le câble.

L'outil souple de coupe peut subir un traitement de surface visant à le protéger et améliorer sa résistance, par exemple un dépôt électrolytique comme l'oxyde de silicium.

Les extrémités de l'outil de coupe ainsi obtenu, via les extrémités du câble, seront de préférence associées, de toute façon connue, afin de former une boucle grâce à la boucle ainsi formée par le câble. L'outil de coupe en boucle sera mis en oeuvre sur toute machine appropriée entre deux poulies dont une sera motrice, à la façon d'un câble tendu entre deux poulies.

La machine devra, selon les besoins, soit par le déplacement de l'outil de coupe, soit par le déplacement du support du matériau à couper, permettre une coupe suivant un plan ou suivant un profil quelconque généré par une génératrice constituée par l'axe de coupe défini par le câble support. Une telle machine est par exemple décrite dans la demande de brevet français FR 9604641.

## Revendications

1. Procédé de fabrication d'un outil de coupe souple comportant un support flexible filiforme (1) qui possède une section transversale circulaire sensiblement constante, une pluralité d'éléments rigides (2) solidaires dudit support flexible filiforme (1), ladite pluralité d'éléments rigides (2) comportant au moins une arête tranchante (3) frontale se développant dans l'espace (4) entourant le support flexible filiforme, ***caractérisé en ce que*** ladite pluralité d'éléments rigides est obtenue au moins par enroulement et sertissage, respectivement d'une pluralité de tronçons de bandes métalliques autour dudit support flexible.

2. Procédé suivant la revendication 1, ***caractérisé en ce qu*'**il consiste à :
a) placer au moins une bande métallique au moins partiellement autour dudit support flexible filiforme (1), et sectionner ladite au moins une bande métallique à la longueur voulue en fonction du diamètre dudit support flexible filiforme, de façon à former au moins un tronçon de bande métallique,
b) meuler au moins une des deux extrémités dudit au moins un tronçon,
c) parfaire l'enroulement dudit au moins un tronçon de bande métallique autour dudit support flexible filiforme (1) de sorte que les deux extrémités soient jointives,
d) souder lesdites deux extrémités dudit au moins un tronçon,
e) former ladite au moins une arête tranchante au moyen d'un outil à frapper entraînant simultanément le sertissage dudit au moins un tronçon sur ledit support flexible filiforme,
f) durcir superficiellement ladite au moins une arête tranchante par un traitement thermique permettant d'obtenir ledit au moins un élément rigide.

3. Procédé suivant la revendication 2, ***caractérisé en ce que*** ladite étape de formage de ladite au moins une arête tranchante au moyen d'un outil à frapper est exécutée de manière radiale et concentrique au dit support flexible filiforme.

4. Procédé suivant la revendication 2 ou 3, ***caractérisé en ce qu*'**il consiste à exécuter les étapes a) à f) successivement au moyen d'un outil à suivre par avancement dudit support flexible filiforme.

5. Procédé suivant la revendication 4, ***caractérisé en ce qu*'**il consiste à renouveler l'exécution successive des étapes a) à f) au moyen d'un outil à suivre par avancement dudit support flexible filiforme et de ladite bande métallique, en vue d'associer ladite pluralité d'éléments rigides au dit support flexible filiforme.

6. Procédé suivant la revendication 5, ***caractérisé en ce qu*'**il consiste à imprimer une rotation au dit support flexible filiforme durant son avancement de manière à décaler angulairement ladite au moins une arête tranchante sur deux éléments rigides successifs.

7. Procédé suivant l'une quelconque des revendications 4 à 6, ***caractérisé en ce qu*'**il consiste à former au moins deux arêtes tranchantes successives différentes sur deux éléments rigides successifs, respectivement, lors de l'étape e).

8. Procédé suivant l'une quelconque des revendications 2 à *7,* ***caractérisé en ce qu*'**il consiste en outre à affûter ladite au moins une arête tranchante après l'avoir durcie superficiellement, afin de modifier son profil.

9. Procédé suivant l'une quelconque des revendications 2 à 8, ***caractérisé en ce qu*'**il consiste en outre à effectuer un traitement de surface de ladite au moins une arête tranchante après l'avoir durcie superficiellement, afin d'augmenter sa dureté et sa résistance à l'usure.

10. Outil de coupe souple comportant un support flexible filiforme (1) qui possède une section transversale circulaire sensiblement constante, comportant une pluralité d'éléments rigides (2) solidaires du support flexible filiforme (1), ladite pluralité d'éléments rigides (2) comportant au moins une arête tranchante (3) frontale se développant dans l'espace (4) entourant le support flexible filiforme, ***caractérisé en ce que*** ledit outil est obtenu par un procédé selon l'une des revendications 1 à 7.

11. Outil de coupe souple suivant la revendication 10, ***caractérisé en ce que*** ladite arête tranchante se développe dans l'espace (4) entourant le support flexible filiforme, sur un des éléments rigides au moins.

12. Outil de coupe souple suivant la revendication 10 ou 11, ***caractérisé en ce que*** lesdits éléments rigides sont espacés selon un pas (5) déterminé le long du support flexible (1).

13. Outil de coupe souple suivant l'une quelconque des revendications 10 à 12, ***caractérisé en ce que*** lesdits éléments rigides (102) adoptent respectivement une surface extérieure (106) longitudinale comportant une forme conique, ladite surface extérieure longitudinale étant délimitée entre une première (110) et une deuxième (111) surfaces transversales d'extrémité, ladite première surface d'extrémité présentant une superficie supérieure à celle de la deuxième surface d'extrémité, la projection de la deuxième surface d'extrémité suivant un axe longitudinal du support flexible étant inscrite dans ladite première surface d'extrémité, et **en ce que** ladite au moins une arête tranchante (103) est constituée par la ligne d'intersection entre la surface extérieure longitudinale (106) de l'élément rigide (102) et la première (110) surface d'extrémité de ce dernier.

14. Outil de coupe souple suivant l'une quelconque des revendications 10 à 13, ***caractérisé en ce que*** deux éléments rigides successifs sont décalés de manière angulaire dans un plan transversal au support flexible.

15. Outil de coupe souple suivant l'une quelconque des revendications 10 à 14, ***caractérisé en ce que*** ledit support flexible filiforme est un câble mono-toron.

16. Outil de coupe souple suivant l'une quelconque des revendications 10 à 15, ***caractérisé en ce que*** ledit support flexible forme une boucle.

17. Utilisation d'un outil de coupe selon l'une quelconque des revendications précédentes pour la découpe de la brique crue, l'argile ou analogue.

## Patentansprüche

1. Verfahren zur Herstellung eines biegsamen Schneidwerkzeugs, umfassend einen flexiblen drahtförmigen Träger (1), der einen im Wesentlichen konstanten kreisförmigen Querschnitt aufweist, eine Vielzahl von starren Elementen (2), die mit dem drahtförmigen Träger (1) fest verbunden sind, wobei die Vielzahl von starren Elementen (2) mindestens eine frontale Schneidkante (3) umfasst, die in dem Raum (4) verläuft, der den flexiblen drahtförmigen Träger umgibt, **dadurch gekennzeichnet, dass** die Vielzahl von starren Elementen mindestens durch Wickeln bzw. Aufquetschen einer Vielzahl von Abschnitten von Metallbändern um den flexiblen Träger erhalten wird.

2. Verfahren nach Anspruch 1, **dadurch gekennzeichnet, dass** es darin besteht,
a) mindestens ein Metallband mindestens teilweise um den flexiblen drahtförmigen Träger (1) anzuordnen und das mindestens eine Metallband auf die gewünschte Länge zu schneiden, die vom Durchmesser des flexiblen drahtförmigen Trägers abhängt, so dass mindestens ein Metallbandabschnitt gebildet wird,
b) mindestens eines der zwei Enden des mindestens einen Abschnitts zu schleifen,
c) die Wicklung des mindestens einen Metallbandabschnitts um den flexiblen drahtförmigen Träger (1) zu vervollkommnen, so dass die beiden Enden aneinander stoßen,
d) die beiden Enden des mindestens einen Abschnitts zu verschweißen,
e) die mindestens eine Schneidkante mittels eines Klopfwerkzeugs zu bilden, was gleichzeitig zum Aufquetschen des mindestens einen Abschnitts auf den flexiblen drahtförmigen Träger führt,
f) die mindestens eine Schneidkante durch eine Wärmebehandlung oberflächlich zu härten, die es ermöglicht, das mindestens eine starre Element zu erhalten.

3. Verfahren nach Anspruch 2, **dadurch gekennzeichnet, dass** der Schritt des Formens der mindestens einen Schneidkante mittels eines Klopfwerkzeugs auf radiale und konzentrische Weise zu dem flexiblen drahtförmigen Träger durchgeführt wird.

4. Verfahren nach Anspruch 2 oder 3, **dadurch gekennzeichnet, dass** es darin besteht, die Schritte a) bis f) nacheinander mittels eines Folgewerkzeugs durch Vorschub des flexiblen drahtförmigen Trägers durchzuführen.

5. Verfahren nach Anspruch 4, **dadurch gekennzeichnet, dass** es darin besteht, die aufeinander folgende Durchführung der Schritte a) bis f) mittels eines Folgewerkzeugs durch Vorschub des flexiblen drahtförmigen Trägers und des Metallbands zu wiederholen, um die Vielzahl von starren Elementen mit dem flexiblen drahtförmigen Träger zu verbinden.

6. Verfahren nach Anspruch 5, **dadurch gekennzeichnet, dass** es darin besteht, den flexiblen drahtförmigen Träger während seines Vorschubs in eine Drehbewegung zu versetzen, um die mindestens eine Schneidkante an zwei aufeinander folgenden starren Elementen im Winkel zu verschieben.

7. Verfahren nach einem der Ansprüche 4 bis 6, **dadurch gekennzeichnet, dass** es darin besteht, beim Schritt e) mindestens zwei verschiedene aufeinander folgende Schneidkanten an jeweils zwei aufeinander folgenden starren Elementen zu bilden.

8. Verfahren nach einem der Ansprüche 2 bis 7, **dadurch gekennzeichnet, dass** es darin besteht, die mindestens eine Schneidkante zu schärfen, nachdem sie oberflächlich gehärtet wurde, um ihr Profil zu verändern.

9. Verfahren nach einem der Ansprüche 2 bis 8, **dadurch gekennzeichnet, dass** es darin besteht, darüber hinaus eine Oberflächenbehandlung der mindestens einen Schneidkante durchzuführen, nachdem sie oberflächlich gehärtet wurde, um ihre Härte und ihre Verschleißfestigkeit zu erhöhen.

10. Biegsames Schneidwerkzeug, umfassend einen flexiblen drahtförmigen Träger (1), der einen im Wesentlichen konstanten kreisförmigen Querschnitt aufweist, umfassend eine Vielzahl von starren Elementen (2), die mit dem drahtförmigen Träger (1) fest verbunden sind, wobei die Vielzahl von starren Elementen (2) mindestens eine frontale Schneidkante (3) umfasst, die in dem Raum (4) verläuft, der den flexiblen drahtförmigen Träger umgibt, **dadurch gekennzeichnet, dass** das Werkzeug durch ein Verfahren nach einem der Ansprüche 1 bis 7 erhalten ist.

11. Biegsames Schneidwerkzeug nach Anspruch 10, **dadurch gekennzeichnet, dass** die Schneidkante an mindestens einem der starren Elemente in dem Raum (4) verläuft, der den flexiblen drahtförmigen Träger umgibt.

12. Biegsames Schneidwerkzeug nach Anspruch 10 oder 11, **dadurch gekennzeichnet, dass** die starren Elemente in einem bestimmten Schritt (5) entlang dem flexiblen Träger (1) beabstandet sind.

13. Biegsames Schneidwerkzeug nach einem der Ansprüche 10 bis 12, **dadurch gekennzeichnet, dass** die starren Elemente (102) jeweils eine Außenfläche (106) in Längsrichtung aufweisen, die eine konische Form besitzt, wobei die Außenfläche in Längsrichtung zwischen einer ersten (110) und einer zweiten (111) Endfläche in Querrichtung begrenzt ist, wobei die erste Endfläche eine Oberfläche aufweist, die größer ist als jene der zweiten Endfläche, wobei die Projektion der zweiten Endfläche gemäß einer Längsachse des flexiblen Trägers in die erste Endfläche eingeschrieben ist, und dass die mindestens eine Schneidkante (103) durch die Schnittlinie zwischen der Außenfläche (106) in Längsrichtung des starren Elements (102) und der ersten (110) Endfläche des Letztgenannten gebildet wird.

14. Biegsames Schneidwerkzeug nach einem der Ansprüche 10 bis 13, **dadurch gekennzeichnet, dass** zwei aufeinander folgende starre Elemente in einer Ebene quer zum flexiblen Träger im Winkel verschoben sind.

15. Biegsames Schneidwerkzeug nach einem der Ansprüche 10 bis 14, **dadurch gekennzeichnet, dass** der flexible drahtförmige Träger ein einlitziges Seil ist.

16. Biegsames Schneidwerkzeug nach einem der Ansprüche 10 bis 15, **dadurch gekennzeichnet, dass** der flexible Träger eine Schleife bildet.

17. Verwendung eines Schneidwerkzeugs nach einem der vorhergehenden Ansprüche zum Schneiden von Lehmziegeln, Ton oder Ähnlichem.

## Claims

1. Method of manufacturing a flexible cutting tool comprising a wire-shaped flexible support (1) which has a substantially constant circular cross-section, a plurality of rigid elements (2) integral with said wire-shaped flexible support (1), said plurality of rigid elements (2) including at least one front cutting edge (3) extending into the space (4) surrounding the wire-shaped flexible support, **characterised in that** said plurality of rigid elements is obtained by winding and swaging, respectively a plurality of sections of metal strips around said flexible support.

2. Method according to claim 1, **characterised in that** it consists in:
a) placing at least one metal strip at least partially around said wire-shaped flexible support (1), and cutting said at least one metal strip to the desired length depending on the diameter of said wire-shaped flexible support so as to form at least one metal strip section,
b) grinding at least one of the two ends of said at least one section,
c) completing the winding of said at least one metal strip section around said wire-shaped flexible support (1), such that the two ends are contiguous,
d) welding the said two ends of the said at least one section,
e) forming the said at least one cutting edge by means of a stamping tool simultaneously initiating the swaging of the at least one section on said wire-shaped flexible support,
f) hardening superficially said at least one cutting edge by heat treatment making it possible to obtain said at least one rigid element.

3. Method according to claim 2, **characterised in that** said step of forming said at least one cutting edge by means of a stamping tool is executed in a manner which is radial and concentric with said wire-shaped flexible support.

4. Method according to claim 2 or 3, **characterised in that** it consists in carrying out steps a) to f) successively by means of a follow-on tool by advancing said wire-shaped flexible support.

5. Method according to claim 4, **characterised in that** it consists in renewing the successive execution of steps a) to f) by means of a follow-on tool by advancing said wire-shaped flexible support and said metal strip, with a view to associating said plurality of rigid elements with said wire-shaped flexible support.

6. Method according to claim 5, **characterised in that** it consists in impressing a rotation on said wire-shaped flexible support during its forward motion so as to offset at an angle the said at least one cutting edge on two successive rigid elements.

7. Method according to any one of claims 4 to 6, **characterised in that** it consists in forming at least two successive different cutting edges on two successive rigid elements, respectively, during step e).

8. Method according to any one of claims 2 to 7, **characterised in that** it consists also in sharpening said at least one cutting edge after having hardened it superficially, so as to modify its profile.

9. Method according to any one of claims 2 to 8, **characterised in that** it also consists in carrying out a surface treatment of said at least one cutting edge after having hardened it superficially, so as to increase its hardness and resistance to wear.

10. Flexible cutting tool comprising a wire-shaped flexible support (1) which has a substantially constant circular cross-section, comprising a plurality of rigid elements (2) integral with the wire-shaped flexible support (1), said plurality of rigid elements (2) comprising at least one front cutting edge (3) extending into the space (4) surrounding the wire-shaped flexible support, **characterised in that** said tool is obtained by a method according to one of claims 1 to 7.

11. Flexible cutting tool according to claim 10, **characterised in that** said cutting edge extends into the space (4) surrounding the wire-shaped flexible support, on one of the rigid elements at least.

12. Flexible cutting tool according to claim 10 or 11, **characterised in that** said rigid elements are arranged at a predetermined spacing (5) along the flexible support (1).

13. Flexible cutting tool according to any one of claims 10 to 12, **characterised in that** said rigid elements (102) adopt respectively a longitudinal external surface (106) comprising a conical shape, said longitudinal external surface being delimited between a first (110) and a second (111) transverse end surface, said first end surface having a greater area than that of the second end surface, the projection of the second end surface along a longitudinal axis of the flexible support being inscribed in said first end surface, and **in that** said at least one cutting edge (103) is constituted by the intersection line between the longitudinal external surface (106) of the rigid element (102) and the first (110) end surface of the latter.

14. Flexible cutting tool according to any one of claims 10 to 13, **characterised in that** two successive rigid elements are offset in an angular manner in a plane which is transverse with respect to the flexible support.

15. Flexible cutting tool according to any one of claims 10 to 14, **characterised in that** said wire-shaped flexible support is a single-strand cable.

16. Flexible cutting tool according to any one of claims 10 to 15, **characterised in that** said flexible support forms a loop.

17. Use of a cutting tool according to any one of the preceding claims for cutting mud bricks, clay or the like.
